# EUROPEAN PATENT SPECIFICATION

(11) **EP 0 496 251 B1**
(45) Date of publication and mention of the grant of the patent: **30.08.1995**
(21) Application number: 92100492.5
(22) Date of filing: 14.01.1992
(51) Int. Cl.: C04B 35/66, B32B 18/00, F27D 1/00

(54) **Insulating monolithic refractory material**
Isolierendes monolithisches Feuerfest-Material
Matériau réfractaire monolithe isolant

(30) Priority: 17.01.1991 FR 9100656
(43) Date of publication of application: 29.07.1992
(73) Proprietor: VESUVIUS FRANCE S.A., 59750 Feignies (FR)
(72) Inventor: Bouchemousse, Jean Luc, F-59680 Ferriere La Grande (FR)
(74) Representative: Ilgart, Jean-Christophe

(56) References cited:
- EP-A- 0 190 098
- EP-A- 0 399 786
- FR-A- 1 582 587
- FR-A- 2 296 485

## Description

The invention concerns an insulating refractory material, in particular for the manufacture of articles for the transfer of a molten metal, such as chutes, feeding chutes or spoons.

More precisely, the invention is concerned with a monolithic refractory material comprised of at least one first layer of a dense refractory material and of a second layer of a refractory foamed material bound to said at least one first layer of dense refractory material. For applications of this type, the thermal conductibility of the material is a primordial factor.

In effect, in order to compensate the heat losses, the metal should be heated to a temperature above that necessary for its subsequent utilization or maintained at the utilization temperature by supplying heat so that it arrives at its destination at the desired temperature. T reduce the heat losses, this is why the transfer elements currently used, such as pouring chutes, ar doubled externally with an insulating layer.

The document FR-A-1 582 587 discloses a method of forming a refractory lining using a refractory base mass containing evaporated water and a coating layer consisting of a refractory mass which possesses a considerable porosity.

The document EP-A-0 190 098 discloses a side isolation lining of a chamber furnace comprising at least one layer of chamotte bricks, insulating refractory foamed bricks and moler or calcium-silicate bricks.

The document FR-A-2 296 485 describes a lining of a receptacle which comprises a first protective layer of chamotte bricks, a second layer of highly insulating bricks fixed on the first layer, a third protective layer of chamotte bricks and a fourth protective layer. The receptacles and the chutes currently used can be produced of molten silica. This material offers numerous advantages. In particular, it is chemically inert relative to numerous liquid metals, such as aluminum, copper, steel, zinc and their alloys. Its nonwettability also makes it possible to avoid the coating or preparation operations that must be provided in the case of most other materials. Its low coefficient of thermal expansion also gives silica an excellent resistance to thermal shocks. Its excellent cohesion precludes the loosening of surface particles by erosion due to the liquid metal. Nevertheless, a refractory material such as silica has a relatively high coefficient of thermal conductivity, i.e., ca. 0.7 W/m.K at a temperature of 700°C.

The present invention concerns a monolithic and refractory composite material that retains the above advantages while affording an improvement in thermal insulation.

The refractory material of the invention is characterized in that the material of said first layer and/or the material said second layer of foamed refractory material are based on vitreous silica.

According to a particular embodiment, the monolithic composite material of the invention is comprised of two external layers of a first dense material, and of a layer of cellular refractory material inserted between the external layers and bound to each of these external layers. Advantageously, the material of the external layer and/or the layer of foam material can have a charge containing at least one adjuvant selected from the group comprised of the refractory earths, metal oxides and compounds of oxides, carbides, borides, silicon oxynitrides, sialons and the thermal decomposition products of carbosilanes. The material of the external layer and/or the material of the cellular material layer is based on vitreous silica.

The invention also concerns a process for preparing an insulating monolithic refractory composite material, characterized in that a slip mold designed to obtain a dense material is filled, that this slip is allowed to set for a certain time, that the slip that is still liquid in the central part is eliminated by pouring it out and that the mold is filled with the foam to constitute a core.

Finally, the invention concerns an article produced of refractory material, characterized in that the said refractory material is the monolithic composite material described above.

Other characteristics and advantages of the invention will arise from a reading of the following description, with reference to the attached figures, of an embodiment given by means of illustration.

Figure 1 is a cross sectional view of a fragment of the material according to the invention.

Figure 2 is a cross sectional view of a pouring chute produced of a material according to the invention.

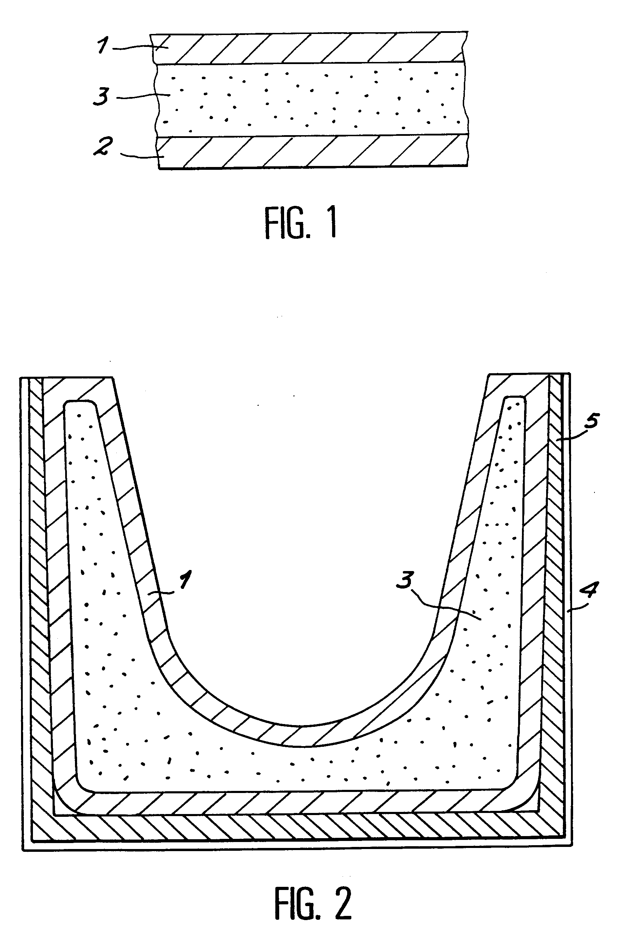

Figure 1 is a sectional view of an insulating refractory material according to the invention. It is comprised of an external layer 1 of a dense refractory material, another layer 2 of this same dense refractory material based on vitreous silica, capable of containing a charge having at least one adjuvant selected from the group comprised of refractory earths, metal oxides and compounds of oxides, carbides, borides, silicon oxynitrides, sialon and the thermal decomposition products of carbosilanes. A layer 3 is located between the layers 1 and 2 ; it is generally thicker, of the same refractory material or a different one, but rendered insulating by the foaming process. This foam is obtained by any suitable process, e.g. by incorporating a frothing agent in the slip based on powder of the basic refractory material. This foam layer is much more insulating than the dense refractory material due to the air enclosed in it.

For example, in the case of silica the conductivity of the dense material is 0.7 W/m.K. at 700°C, while the conductivity of the foam is less than 0.2 W/m.K. at 700°C. The total conductivity of the composite material of the invention is naturally dependant on the respective thickness of the dense layers 1 and 2 and the foam layer 3. The greater the thickness of the foam in proportion to the total thickness, the lower the thermal conductivity.

By means of example, a refractory composite raterial of vitreous silica is produced ; it has a coefficient of ca. 0.25 W/m.K at 700°C, i.e., approximatively 3 times more insulating than the dense silica.

The material is preferably obtained by filling a mold corresponding to the article with a slip prepared of the dense material and allowing this slip to set for a certain length of time. A solid, or at least pasty layer is formed on the inner walls of the mold, while the central part remains liquid. The slip that remains in liquid form is poured out. The mold is then filled with the cellular slip to form the core of composite material. Because the dense part is not yet set, the bond is effected between the outer layers and the core by interpenetration of the dense layers 1 and 2 and the core.

This makes it possible to obtain a monolithic composite material.

The whole unit is allowed to set ; then it is ejected from the mold to obtain the raw article, which will be fritted by firing.

The invention makes it possible to obtain articles of simple form, such as plates, cylinders or complexes (chutes).

The material has a smooth surface that does not crumble and it resists corrosion and erosion by the metals.

It is particularly applicable for the production of chutes for foundry practice. It can also be applied to the production of articles that require high mechanical characteristics on the surface in association with an excellent thermal insulation, e.g., shaped articles for lining a heat-treatment furnace.

By means of example, Figure 2 shows a cross section of a pouring chute for casting aluminum. It is comprised of a dense external layer 1 of dense vitreous silica, surrounding a silica foam 3 that constitutes thermal insulation. In the utilization position the chute is generally mounted in a metal body 4. A layer of ceramic fibers 5 is located between the metal body and the chute.

## Claims

1. Monolithic refractory material comprised of at least one first layer (1, 2) of a dense refractory material and of a second layer of a refractory foamed material (3) bound to said at least one first layer (1, 2) of dense refractory material characterized in that the material of said first layer (1,2) and/or the material said second layer of foamed refractory material (3) are based on vitreous silica.

2. Refractory composite monolithic material according to claim 1, characterized in that it is comprised of two external layers (1, 2) of said first dense refractory material, and of a layer of foamed refractory material (3) of said second refractory material inserted between the external layers (1) and (2) and bound to these layers of dense material.

3. Refractory material according to claim 1 or 2, characterized in that the material of the external layer (1, 2) and/or the material of the layer of foamed material (3) have a charge that can contain at least one adjuvant selected from the group comprised of the refractory earths, metal oxides and oxide compounds, carbides, borides, silicon oxynitrides, sials and the thermal decomposition products of carbosilanes.

4. Process for producing an insulating monolithic refractory composite material according to claim 1, characterized in that a mold is filled with a slip designed to obtain a dense material, that this slip is allowed to set for a certain time, that the slip remaining liquid in the central part is eliminated by pouring it out, and that the mold is filled with the foam for constituting the core (3) of the material.

5. Article produced of refractory material, characterized in that the said material is the material according to one of claims 1 - 3.

## Patentansprüche

1. Monolithisches Feuerfestmaterial, das mindestens aus einer ersten Schicht (1, 2) eins einem dichten Feuerfestmaterial und einer zweiten Schicht aus einem feuerfesten Schaummaterial (3) besteht, die mit der genannten ersten Schicht (1,2) aus dichtem Feuerfestmaterial verbunden ist, dadurch gekennzeichnet, daß das Material der genannten ersten Schicht (1,2) und/oder das Material der genannten zweiten Schicht aus feuerfestem Schaummaterial (3) ein Material auf Kieselglasbasis darstellt.

2. Monolithisches Feuerfestmaterial nach Anspruch 1, dadurch gekennzeichnet, daß dieses aus zwei externen Sohichten (1,2) aus dem genannten ersten dichten Feuerfestmaterial und einer Schicht aus dem feuerfesten Schaummaterial des genannten zweiten feuerfesten Materials (3) besteht, die sich zwischen den externen schichten (1) und (2) befindet und mit diesen Schichten aus dichtem Material verbunden ist.

3. Monolithisches Feuerfestmaterial nach Anspruch 1 oder 2, dadurch gekennzeichnet, daß das Material der externen Schicht (1, 2) und/oder das Material der Schicht aus Schaummaterial (3) eine Einlage aufweist, die mindestens eine Beimengung enthält, die aus der Gruppe der Stoffe stammt, die aus feuerfesten Erden, Metalloxiden und Oxidverbindungen, Karbiden, Boriden, Siliziumoxynitriden, Silanen und thermischen Zerfallsprodukten der Karbosilanen bestehen.

4. Verfahren zur Herstellung von monolithischem feuerfesten Verbundmaterial nach Anspruch 1, dadurch gekennzeichnet, daß eine Gießform mit einem Gleitmittel gefüllt wird, das dafür ausgelegt ist, ein dichtes Material zu bilden, daß man des Gleitmittel eine bestimmte Zeit stehen läßt, damit es sich verfestigt, daß die von dem Gleitmittel übrig bleibende Flüssigkeit in dem mittleren Teil durch Ausgießen entfernt wird und daß die Gießform mit dem Schaummaterial gefüllt wird, aus dem der Kern (3) des Materials gebildet wird.

5. Artikel, der aus feuerfestem Material gefertigt wird, dadurch gekennzeichnet, daß das genannte Material dem Material nach einem der Ansprüche 1 bis 3 entspricht.

## Revendications

1. Matériau réfractaire monolithique constitué d'au moins une première couche (1,2) d'un matériau réfractaire dense et d'une seconde couche d'un matériau réfractaire moussé (3) lié à ladite au moins une première couche (1,2) de matériau réfractaire dense, caractérisé en ce que le matériau de ladite première couche (1,2) et/ou le matériau de ladite seconde couche de matériau réfractaire moussé (3) sont à base de silice vitreuse.

2. Matériau réfractaire monolithique selon la revendication 1 caractérisé en ce qu'il est composé de deux couches extérieures (1,2) dudit premier matériau réfractaire dense, et d'une couche de matériau réfractaire moussé dudit second matériau réfractaire insérée entre les couches extérieures (1) et (2) et liées à ces couches de matériau dense.

3. Matériau réfractaire monolithique selon la revendication 1 ou 2 caractérisé en ce que le matériau de la couche externe (1,2) et/ou le matériau de la couche de matériau moussé (3) comporte une charge pouvant contenir au moins un adjuvant choisi dans le groupe constitué par les terres réfractaires, les oxydes métalliques et composés d'oxydes, les carbures, les borures, les oxynitrures de silicium, les sialons et les produits de décomposition thermique des carbosilanes.

4. Procédé de réalisation d'un matériau composite réfractaire monolithe isolant selon la revendication 1, caractérisé en ce que l'on remplit un moule d'une barbotine destinée à obtenir un matériau dense, en ce qu'on laisse prendre cette barbotine pendant une certaine durée, qu'on élimine la barbotine restée liquide dans la partie centrale par vidage, et qu'on remplit le moule avec la mousse pour constituer l'âme (3) du matériau.

5. Pièce réalisée en matériau réfractaire caractérisée en ce que ledit matériau est le matériau selon l'une quelconque des revendications 1 à 3.
